# EUROPÄISCHE PATENTSCHRIFT

(11) **EP 1 649 920 B1**
(45) Veröffentlichungstag und Bekanntmachung des Hinweises auf die Patenterteilung: **28.11.2007**
(21) Anmeldenummer: 05109436.5
(22) Anmeldetag: 11.10.2005
(51) Int. Cl.: B01D 46/52

(54) **Luftfilter**
Air filter
Filtre à air

(30) Priorität: 13.10.2004 DE 102004050018
(43) Veröffentlichungstag der Anmeldung: 26.04.2006
(73) Patentinhaber: MANN+HUMMEL GmbH, 71638 Ludwigsburg (DE)
(72) Erfinder: Oelpke, Reinhard, 67376, Harthausen (DE); Hotop, Torsten, 71691, Freiberg (DE); Schulz, Franziska, 67165, Waldsee (DE); Pelz, Andreas, 71706, Markgröningen (DE); Lampert, Johannes, 71686, Remseck (DE)

(56) Entgegenhaltungen:
- EP-A- 1 169 109
- US-A1- 2002 184 864
- US-A1- 2003 106 432

## Beschreibung

### Technisches Gebiet

Die Erfindung betrifft ein Luftfilterelement gemäß der Gattung des Patentanspruches 1. Weiterhin betrifft die Erfindung eine Filtervorrichtung gemäß der Gattung des Patentanspruches 5.

### Stand der Technik

Filterelemente mit axialer Durchströmung werden in vielen Bereichen eingesetzt, in denen es gilt, ein Gas oder eine Flüssigkeit zu filtrieren. Diese Elemente werden hierzu in jeglicher Art von Gehäusen eingesetzt und müssen bestimmungsgemäß nach dem Erreichen einer bestimmten Ladung oder nach vorgegebenen Wartungsintervallen ersetzt oder gereinigt werden. Hierbei ist die Möglichkeit der Handhabung des Filterelementes von entscheidender Bedeutung, da ein schlecht handhabbares Filterelement möglicherweise erst gar nicht getauscht oder gereinigt wird oder bei dem Versuch der Handhabung über nicht vorgesehene Werkzeuge Schäden am Element oder System verursacht werden können. Die EP 1169109 B zeigt ein axial durchströmtes Filterelement mit einer stirnseitigen Anströmung und einer gegenüberliegenden stirnseitigen Abströmung ohne eine Umlenkung des Gasstromes, bei der ein sich axial von der ersten Stirnseite erstreckender Griff vorgesehen ist, welcher fest mit dem Filterelement - bevorzugt mit dem inneren Kern des Filterelementes - verbunden ist. Dieser Griff erstreckt sich derart weit von der Stirnseite des Filterelementes, dass eine problemlose Handhabung werkzeugfrei mit der Hand möglich ist. In vielen Einbausituationen ist es jedoch nachteilig, wenn das Filterelement ein sich axial über die Stirnseite hinaus erstreckendes Griffelement verfügt, da der dadurch eingenommene Raum nicht mehr für weitere Funktionselemente zur Verfügung steht. Auch lassen sich derartige Filterelemente schlechter bei der Lagerhaltung stapeln, und ein fest mit dem Kern verbundener Griff erweist sich nachteilig bei der Herstellung des Filterelementes, bei der der Griff eingespannt werden muss, um die Filterlagen aufzuwickeln.

In der Offenlegungsschrift US 2002/184864 A1 wird eine Filtervorrichtung mit einer abwechselnd angeordneten flachen und gefalteten Filterlage gelehrt, wobei die flache Lage mit der gefalteten Lage im Wechsel derart angeordnet ist, dass sich Kanäle mit offenem Querschnitt ergeben. Die sich hieraus ergebenden Kanäle sind stirnseitig wechselseitig verschlossen, so dass das zu filternde Fluid bei der Durchströmung des Filterelementes von einer Anströmseite zu einer Abströmseite eine der Lagen, die zur Filterung des Fluides vorgesehen sind, durchtreten muss. Ein Stützkörper ist zentral in dem Filtermedium angeordnet und dadurch von den Kanälen umgeben und weist eine stirnseitige Öffnung auf. Ein Gegenpart zur Handhabung des Filterelements weist einen korrespondierend zur Öffnung im Stützkörper gestalteten Teil auf. Die Aufgabe der Erfindung ist es daher, die oben genannten Nachteile zu vermeiden und ein axial durchströmbares Filterelement zu schaffen, welches einfach und kostengünstig in der Herstellung ist, im eingebautem Zustand keinen Überflüssigen Raum einnimmt und an verschiedene Systeme anpassbar ist.

Diese Aufgabe wird durch die Merkmale der Patentansprüche 1 und 5 gelöst.

### Offenbarung der Erfindung

Das erfindungsgemäße Filterelement für einen Fluidstrom zur stirnseitigen Anströmung weist ein axial durchströmtes Filtermedium, Mittel zur Abdichtung der Anströmseite von der Abströmseite des Filterelementes an der Außenseite des Filtermediums und wenigstens einen zentral im Filterelement angeordneten Stützkörper auf. Das Filtermedium weist hierbei abwechselnd angeordnete flache und gefaltete Filterlagen auf, wobei die flache Lage mit der gefalteten Lage im Wechsel derart angeordnet ist, dass sich Kanäle mit offenem, insbesondere dreieckigem, Querschnitt ergeben. Die sich hieraus ergebenden Kanäle werden nun stirnseitig wechselseitig verschlossen, so dass das zu filternde Fluid bei der Durchströmung des Filterelementes von einer Anströmseite - gebildet durch eine Stirnseite des Filterelementes - zu einer Abströmseite - gebildet durch dessen andere Stirnseite - eine der genannten Lagen, die zur Filterung des Fluides vorgesehen sind, durchtreten muss. Der Stützkörper ist in dieser Ausgestaltung zentral in dem Filtermedium angeordnet und dadurch von den Kanälen umgeben, wobei er sich axial im Wesentlichen bis zu wenigstens einer ersten Stirnseite des Filterelementes erstreckt. Die Lagen des Filtermediums sind hierbei bevorzugt aus einem Filterpapier hergestellt, können jedoch auch beispielsweise aus einem vollsynthetischen Medium bestehen. Hier müsste die gefaltete Lage durch eine Imprägnierung des vollsynthetischen Mediums unterstützt werden. Das Filterelement kann dabei eine eckige, runde, elliptische oder ovale Querschnittsform aufweisen, bevorzugt ist es an den Außenkanten rund und zwischen den Außenkanten gerade in Form eines Ovals aufgebaut. Der Stützkörper, welcher zentral im Filterelement angeordnet ist, wird bevorzugt im Spritzgießverfahren hergestellt, kann jedoch auch aus einem anderen Material wie Kunststoff und in einem anderen Herstellverfahren hergestellt werden. Durch den wechselseitigen Verschluss der zu durchströmenden Kanäle lässt es sich erreichen, dass durch eine geschickte Anordnung jeweils die vollständige Fläche des umgebenden Filtermediums der ersten anströmseitigen Kanäle durchströmt werden kann, um in die zweiten abströmseitigen Kanäle zu gelangen. Eine Ausnahme bilden hierbei nur die zu äußerst liegenden Kanäle. Erfindungsgemäß erstreckt sich ja der Stützkörper axial wenigstens nur bis zur ersten Stirnseite des Filterelementes, bevorzugt erstrecken sich jedoch beide Stirnseiten des Stützkörpers bis zu den entsprechenden Stirnseiten des Filtermediums. Es sind jedoch auch sämtliche Längenunterschiede zwischen axialer Länge des Stützkörpers und axialer Länge des Filtermediums denkbar, solange nur die eine Stirnseite des Stützkörpers sich bis zur ersten Stirnseite des Filtermediums erstreckt. Diese Stirnseite des Stützkörpers weist wenigstens eine stirnseitig angeordnete Öffnung auf, in welcher Mittel zur Handhabung des Filterelementes mittels eines hierzu korrespondierenden Gegenparts angeordnet sind. Dies bedeutet, dass Stützkörper und Filtermedium an der ersten Stirnseite einen ebenen stirnseitigen Abschluss des Filterelementes bilden. Durch das in einer stirnseitigen Öffnung des Stützkörpers vorhandene Mittel zur Handhabung des Filterelementes kann nun mit Hilfe eines Gegenparts, welcher in diese Öffnung eingreift, das Filterelement mit dem Gegenpart beispielsweise zu Wartungs- oder Ersatzzwecken aus einem Gehäuse herausgenommen oder auch mittels dieses Gegenparts wieder in das Gehäuse eingesetzt werden. Durch den stirnseitigen ebenen Abschluss des Filterelementes ergeben sich große Vorteile in der Raumausnutzung. Ein weiterer Vorteil ergibt sich in der Handhabung des Filterelementes selbst, da dieses ohne hervorstehende Teile besser zu transportieren und zu lagern ist und weiterhin während des Transportes oder der Handhabung kein Brechen überstehender Teile möglich ist.

Gemäß der Erfindung sind die mindestens eine flache Lage und die mindestens eine gefaltete Lage im Wechsel um den Stützkörper gewickelt. Der Stützkörper weist ein axial über die Höhe des Stützkörpers verlaufende Stufe auf, welche eine Anschlagkante für die erste Wickellage darstellt. Durch das Einbringen der axial verlaufenden Stufe in dem Stützkörper, lässt sich das Aufwickeln des Filtermediums exakt definieren. Im Bereich dieser Stufe wird beispielsweise eine Klebstoffraupe aufgetragen, auf welche dann die erste Wickellage aufgeklebt wird und wobei der Anfang der Wickellage an der axial verlaufenden Stufe anliegt. Die Höhe der axial verlaufenden Stufe ist bevorzugt der Höhe der ersten Wickellage anzupassen, so dass nach der ersten vollständigen Umrundung des Stützkörpers mit der Wickellage keine Stufe für die weiteren Lagen aufkommt. Da der Stützkörper bevorzugt die gleiche Breite, also die Entfernung zwischen den beiden Stirnseiten, wie die Breite der Wickellagen aufweist, zeigt sich hier ein weiterer Vorteil der Ausgestaltung des Stützkörpers, nämlich, dass der Stützkörper in einer Vorrichtung exakt eingespannt werden kann, wobei die Vorrichtung den Stützkörper nach Ankleben des Anfangs der ersten Wickellage in Rotation versetzt und so die weiteren Lagen auf den Stützkörper aufgewickelt werden können. Durch eine identische Breite von Stützkörper und Wickellage ist die Führung der Wickellagen zu einem ebenen stirnseitigen Abschluss besonders einfach zu realisieren.

Es ist vorteilhaft, die axial verlaufende Stufe im Wesentlichen in der Mitte des länglichen Stützkörpers anzuordnen und im jeweils äußeren Bereich der ersten Stirnseite des Filterelementes jeweils eine Öffnung mit Mitteln zur Handhabung des Filterelementes anzuordnen. Durch die räumliche Trennung der axial verlaufenden Stufe von den stirnseitigen Öffnungen des Stützkörpers ergeben sich auch bei einer evtl. Überdosierung der Leim- oder Klebraupe keine Probleme beispielsweise durch ein Verkleben der Öffnungen des Stützkörpers.

Urformtechnisch ist es weiterhin vorteilhaft, dass am Stützkörper im Bereich wenigstens einer Öffnung parallel zur Stirnseite an der Außenfläche des Stützkörpers angeordnet wenigstens eine Nut vorgesehen ist. Bei einer Herstellung des Stützkörpers aus Kunststoff ist es zu vermeiden, Materialanhäufungen im Verlauf von Wandstärken zu produzieren. Diese Materialanhäufungen führen nach dem Spritzgießprozess beim Erkalten zu Spannungen und evtl. auch zu einem Verzug des Formteils. Durch die im Stützkörper vorhandene Anschlagstufe für die Wickellagen weisen die beiden außenliegenden Endbereiche des Stützkörpers eine unterschiedliche Dicke auf. Da bevorzugt die beiden Öffnungen zur Handhabung des Filterelementes im Stützkörper die gleiche Größe aufweisen und in ihrer Lage zueinander ausgerichtet sind, kommt es hier zu einer Materialanhäufung in der Wandstärke der Öffnung auf der dickeren Seite des Stützkörpers. Durch das Anlegen einer parallel zur Stirnseite verlaufenden Nut im Berech dieser Wandung wird durch die Nut dort von außen die Materialanhäufung eliminiert, wobei dennoch umlaufende Anlagekanten für die Wickelung des Filtermediums erhalten bleiben.

Gemäß einer vorteilhaften Ausgestaltung der Erfindung weist wenigstens eine Öffnung des Stützkörpers einen Axialanschlag für den Gegenpart auf. Der Axialanschlag kann hierbei durch eine nach innen in die Öffnung hineinstehende Kante oder durch eine Verjüngung des Öffnungsdurchmessers in das Innere des Stützkörpers hinein erfolgen. Durch die Bereitstellung des Axialanschlages ergibt sich ein Vorteil bei der Handhabung des Filterelementes durch den Gegenpart, da hiermit ein axialer Druck in Richtung des Filterelementes durch den Gegenpart ausgeübt werden kann, um das Filterelement in die Einbauposition zu bringen.

Der zur Handhabung des Filterelementes notwendige Gegenpart weist einen korrespondierend zur Öffnung im Stützkörper gestalteten Teil auf, derart, dass sich der Gegenpart im Inneren der Öffnung des Stützkörpers lösbar mit dem Stützkörper verbinden lässt, wodurch eine Handhabung des Filterelementes gegeben ist. Ein Teil des Gegenparts greift dabei in den Stützkörper ein und kann dort, z. B. über eine geeignete Rastverbindung, eine lösbare Verbindung mit dem Filterelement eingehen, wobei die eingegangene Verbindung in der Lage ist, durch den Gegenpart das Filterelement aus dem Einbauort zu entnehmen bzw. es ist den Einbauort einzusetzen. Bevorzugt ist die Lösbarkeit des Gegenparts werkzeuglos zu bewerkstelligen, d. h. dass durch einen einfachen Handgriff die Verbindung zwischen Gegenpart und Filterelement zerstörungsfrei getrennt werden kann.

Gemäß einer Ausgestaltung des Gegenparts weist dieser korrespondierend zur Öffnung im Stützkörper ausgestaltete Teil des Gegenparts einen Führungs- und Zentrierungsteil sowie einen Verbindungsteil auf. Zunächst taucht der Teil des Gegenparts mit dem Führungs- und Zentrierungsteil in die Öffnung des Stützkörpers des Filterelementes ein und richtet dabei Filterelement und Gegenpart zueinander aus. Dadurch wird gewährleistet, dass die empfindliche stirnseitige Medienoberfläche des Filterelementes bei der Zusammenführung von Filterelement und Gegenpart nicht verletzt wird. Nach der Zentrierung der beiden Teile zueinander greift dann der Verbindungsteil des Gegenparts in das entsprechend korrespondierende Verbindungsmittel des Stützkörpers ein und verbindet sich lösbar mit diesem. Dies kann z. B. eine Clipsverbindung sein, wobei in der Öffnung im Stützkörper im weiteren Verlauf Fenster im Stützkörper angeordnet sind, in die eine Clipsnase des Gegenparts, welche eine federnde Befestigung aufweist, eingreifen kann. Über ein Zusammendrücken der federnden Befestigung kann diese Verbindung dann einfach und leicht wieder gelöst werden.

Vorteilhafterweise ist der Gegenpart ein Gehäuseteil, insbesondere ein Sicherungsgitter, wobei das Filterelement durch das Gehäuseteil handhabbar ist. Möglich ist hierbei, dass das Gehäuseteil einen Lufteinlass zur Anströmung der Stirnseite des Filterelementes aufweist und mit einem weiteren Gehäuseteil, in welchem das Filterelement eingesetzt ist, ebenfalls über eine lösbare Verbindung verbunden ist. So lässt sich nun beim Lösen des Gehäuseteils das Gehäuseteil mitsamt dem Filterelement entfernen, und anschließend lassen sich daraufhin Filterelement und Gehäuseteil voneinander trennen. In der bevorzugten Ausführung ist das Gehäuseteil ein Sicherungsgitter, welches einerseits einen möglichst geringen Druckverlust für die Einströmung in das Filterelement bedeutet und andererseits eine Sicherheit gegen Verletzung des Filtermediums darstellt, wobei die Luft direkt durch das Sicherungsgitter von außen in das Filterelement hineinströmt. Das Sicherungsgitter ist ebenfalls mit dem Gehäuseteil, in welchem das Filterelement eingesetzt ist, lösbar verbindbar, wobei durch die Zentriermöglichkeit zwischen Sicherungsgitter und Filterelement und einer Zwangsfixierung zwischen Sicherungsgitter und dem Gehäuseteil, in welchem das Filterelement eingesetzt ist, eine exakte Positionierung des Filterelementes zu dem Gehäuseteil stattfindet.

In einer alternativen Ausgestaltung ist der Gegenpart ein weiteres Funktionselement, insbesondere ein Vorabscheider, derart, dass das Filterelement durch das Funktionselement handhabbar ist. In bestimmten Anwendungsfällen ist es sinnvoll, vor das eigentliche Filterelement noch einen Vorabscheider, wie beispielsweise einen Zyklonvorabscheider, vorzuschalten. Dieser lässt sich entsprechend der Erfindung lösbar mit dem Filterelement verbinden und ermöglicht so, eine Handhabung des Filterelementes ohne eine Verletzungsmöglichkeit des Filtermediums darzustellen.

Ebenfalls alternativ hierzu ist der Gegenpart als Griffwerkzeug zur Handhabung des Filterelementes aufgebaut. Beispielsweise lässt sich so ein T-förmiger Griff vorstellen, welcher mit dem Einzelschenkel des T in die Öffnung des Stützkörpers einführbar, mit dieser lösbar verbindbar ist und wobei die Handhabung dann durch das T-förmige Stück gegeben ist. Es sind jedoch alle weiteren Griffmöglichkeiten, die eine fehlerfreie Handhabung gewährleisten, möglich.

Bei der Ausführung des Gegenparts als Griffwerkzeug ist dieser vorzugsweise lösbar in einem Gehäuseteil angeordnet. Im Falle einer Wartung oder Reparatur des Filterelementes ist so der Griff immer in unmittelbarer Nähe des Filterelementes vorhanden, und es muss kein Werkzeug von dem Wartungsleistenden mitgeführt werden. Das Griffwerkzeug kann hierbei in einer Ausbuchtung des Gehäuses eingeschnappt oder eingeclipst sein. Bevorzugt ist es unverlierbar mit dem Gehäuse verbunden, so dass die Verfügbarkeit jederzeit gewährleistet ist. Denkbar ist hier beispielsweise eine Anordnung wie bei einem Bohrfutterschlüssel einer Bohrmaschine.

Alternativ hierzu kann der Gegenpart in Form des Griffwerkzeugs lösbar in einer weiteren Öffnung des Stützkörpers angeordnet sein, derart, dass der Gegenpart zum Gebrauch aus dem Stützkörper herausgezogen wird. In vorteilhafter Weise lässt sich der Gegenpart in einer weiteren Öffnung des Stützkörpers arretieren, wobei er jedoch nicht axial aus der stirnseitigen Ebene des Filterelementes herausschaut. Die Befestigung kann beispielsweise über einen Knebel oder auch über ein Filmscharnier, welches bei der Herausnahme des Stützkörpers zerstört wird, erfolgen. Auf diese Art und Weise ist das Griffelement mit dem Filterelement verbunden, und ist für jedermann auf den ersten Blick erkennbar und verfügbar. Es ist aber auch möglich, den Gegenpart über eine Art Springfedermechanismus innerhalb des Stützkörpers zu lösen und beim Herausziehen bei einer bestimmten Position des Griffelementes eine Arretierung zwischen Griffelement und Stützkörper herbeizuführen, so dass dann direkt eine Handhabung des Filterelementes gegeben ist. Ebenso möglich ist aber auch, die erstmalige vollständige Trennung von Stützkörper und Griffelement, um dann im nächsten Schritt in die entsprechend passenden Öffnungen des Stützkörpers einzutauchen und dort die Verbindung herzustellen.

In der erfindungsgemäßen Filtervorrichtung mit einem Filterelement und einem Gegenpart gemäß den oben angegebenen Daten ist das Filterelement in einem ersten Gehäuseteil angeordnet, wobei eine im Bereich der ersten Stirnseite des Filterelementes radial umlaufende Dichtung des Filterelementes an einer korrespondierend hierzu ausgestalteten Gehäuseaufnahme des ersten Gehäuseteils anliegt. Die erste Stirnseite des Filterelementes ist hierbei die angeströmte Stirnseite. Durch das Anliegen der radial umlaufenden Dichtung an der Gehäuseaufnahme des ersten Gehäuseteils wird eine Abdichtung zwischen An- und Abströmseite hergestellt, wobei ein zweites Gehäuseteil als Gegenpart mit einem Teil in die Öffnung des Stützkörpers des Filterelementes eingeclipst wird und wobei das zweite Gehäuseteil die Form eines fluiddurchlässigen Stützgitters aufweist. Die Außenkontur des fluiddurchlässigen Stützgitters ist korrespondierend zur stirnseitigen Anlagefläche der umlaufenden Dichtung ausgestaltet, und an der Außenkontur sind Befestigungsmittel zur lösbaren Befestigung des zweiten Gehäuseteils am ersten Gehäuseteil unter Einklemmung der Dichtung des Filterelementes angeordnet. Dadurch erfolgt eine Zentrierung des Filterelementes zum zweiten Gehäuseteil und durch das zweite Gehäuseteil eine weitere Zentrierung zum ersten Gehäuseteil. Nach dem Lösen der Befestigung zwischen den beiden Gehäuseteilen ist anschließend eine Handhabung des Filterelementes durch das zweite Gehäuseteil möglich. Im Wartungsfall kann dann das zweite Gehäuseteil mit dem daran lösbar verbundenen Filterelement beispielsweise auf einen Tisch abgestellt werden, und über ein Lösen einer Clipsverbindung zwischen zweitem Gehäuseteil und Filterelement können diese beiden Teile dann anschließend voneinander getrennt werden. Bei einem Austausch des Filterelementes im Wartungsfall wird anschließend das neue Filterelement mit dem zweiten Gehäuseteil über ein Einclipsen verbunden, wobei eine Zentrierung zwischen zweitem Gehäuseteil und Filterelement erfolgt, und anschließend werden zweites Gehäuseteil und daran angeschlossenes Filterelement in das erste Gehäuseteil eingeführt und über eine Verbindung zwischen erstem und zweitem Gehäuseteil miteinander verbunden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Weitere Einzelheiten der Erfindung werden in der Zeichnung anhand von schematischen Ausführungsbeispielen beschrieben. Hierbei zeigt
Figur 1 eine schematische Ansicht der vollständigen Filtervorrichtung,
Figur 2 eine schematische Ansicht von Sicherungsgitter und Filterelement,
Figur 3 eine schematische Ansicht von Sicherungsgitter und dazugehörigem Stützkörper unter Weglassung des Filtermediums, und
Figur 4 eine Einzelansicht des Stützkörpers.

### Ausführungsform(en) der Erfindung

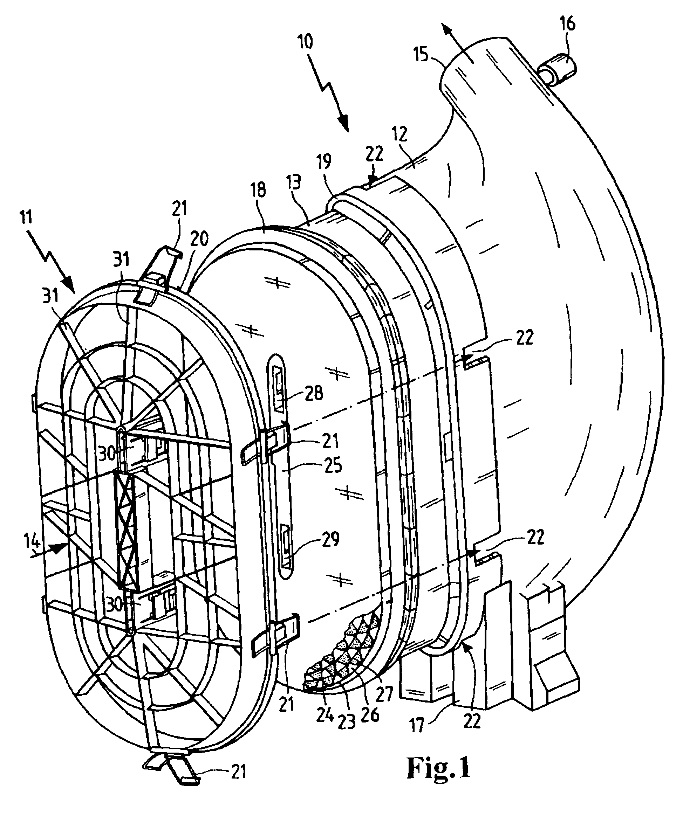

Die Figur 1 zeigt eine Filtervorrichtung 10 für den stationären Einsatz zur Filterung der Ansaugluft eines Kompressors. Diese Filtervorrichtung 10 kann jedoch auch genauso gut im mobilen Bereich verwendet werden, überall dort, wo die Filterung eines Luftstromes notwendig ist. Die Filtervorrichtung 10 weist ein erstes Gehäuseteil 12 mit einem dichtend dazwischen angeordneten Filterelement 13 sowie als zweites Gehaüseteil ein sicherungsgitter 11 auf. Das Filterelement 13 wird dabei axial durchströmt, wobei die eine Stirnseite den Einlass 14 darstellt und das zweite Gehäuseteil 12 den Auslass 15 aufweist. Im Bereich des Auslasses 15 ist ein Wartungsanzeiger 16 angeordnet, welcher über eine entsprechende Darstellung nach entsprechender Beladung des Filterelementes einen Wartungsbedarf des Filterelementes 13 anzeigt. Das erste Gehäuseteil 12 ist über einen Gehäuseflansch 17 mit dem Boden verbunden. Zur Abdichtung zwischen einer Roh- und einer Reinseite weist das Filterelement 13 eine im Bereich der ersten Stirnseite des Filterelementes 13 angeordnete umlaufende Dichtung 18 auf, welche an einer Anlagedichtfläche 19 des ersten Gehäuseteils aufliegt und somit für eine Abdichtung zwischen dem Inneren des Gehäuses und der Umgebung durch das Filterelement 13 sorgt. Zur Befestigung des Filterelementes 13 in dem ersten Gehäuseteil 12 wird das Sicherheitsgitter 11 über eine am Sicherungsgitter 11 vorhandene Auflagefläche 20 auf die umlaufende Dichtung 18 gedrückt und daraufhin mit Schnapphaken 21, welche am Sicherheitsgitter 11 vorhanden sind, an Aussparungen 22, welche am ersten Gehäuseteil 12 vorhanden sind, arretiert. Das Filterelement 13 ist aus einem Wechsel aus flachen Filterlagen 23 und gefalteten Filterlagen 24, welche um einen Stützkörper 25, welcher zentral im Filterelement angeordnet ist, gewickelt sind, hergestellt. Durch den Wechsel der flachen Lagen 23 und der gefalteten Lagen 24 ergibt sich nach der Wickelung um den Stützkörper 25 eine Kanalstruktur, welche durch den Einsatz eines Klebstoffes zu wechselseitig offenen Kanälen 26 und geschlossenen Kanälen 27 führt. So muss die zu filtrierende Luft beim Durchgang durch das Filterelement 13 erst in einen der offenen Kanäle 26 eintreten, durchtritt im Verlauf des Kanals entweder die flache Filterlage 23 oder gefaltete Filterlage 24, um dann aus dem benachbarten Kanal aus dem Filterelement 13 wieder herauszutreten. Das bedeutet, dass jeder Kanal, welcher an der ersten Stirnseite offen ist, an seiner zweiten Stirnseite geschlossen ist und die um diesen Kanal herum benachbarten Kanäle genau gegenteilig geöffnet und geschlossen sind. Der im Filterelement 13 angeordnete Stützkörper 25 weist eine erste Öffnung 28 und eine zweite Öffnung 29 auf, in welche jeweils ein Verbindungselement 30, welches mit dem Sicherungsgitter 11 verbunden ist, eintaucht. Die Kombination aus Verbindungselement 30 und den Öffnungen 28, 29 ergibt die Handhabbarkeit des Filterelementes 13 über das Sicherungsgitter 11. Die Verbindung zwischen Verbindungselement 30 und dem Stützkörper 25 über die Öffnungen 28, 29 ist lösbar gestaltet. Zur Stabilisierung des Sicherungsgitters 11 und zum Schutz der stirnseitigen Oberfläche des Filterelementes 13 sind am Sicherungsgitter 11 Rippen 31 ausgeformt, welche nur einen absolut geringen Druckverlust bei der stirnseitigen Anströmung des Filterelementes 13 verursachen, aber dennoch einen sehr guten Schutz des Filterelementes 13 gegen Beschädigung darstellen. Weiterhin kann durch einen werkzeuglosen Eingriff in die Rippen 31 das Filterelement 13 mit Hilfe des Sicherungsgitters 11 zu Wartungszwecken gehandhabt werden.

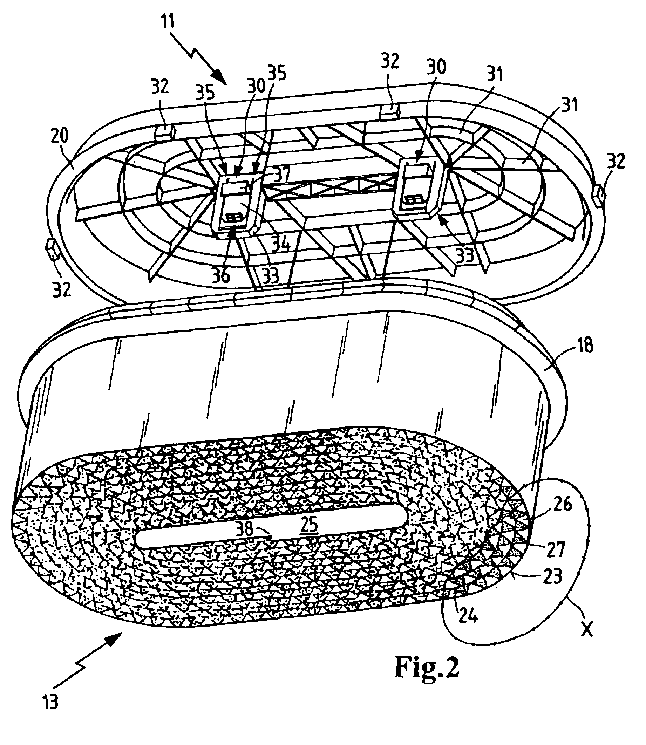

Die Figur 2 zeigt eine schematische Ansicht des Sicherungsgitters 11 und des Filterelementes 13. Der vorherigen Figur entsprechende Bauteile sind mit den gleichen Bezugszeichen versehen. Umlaufend um den Kragen des Sicherungsgitters 11 sind verteilt mehrere Befestigungselemente 32 angeordnet, an welchen die Schnapphaken 21 mit dem Sicherungsgitter 11 verbunden werden. In dieser Ansicht ist gut am Sicherungsgitter 11 die Ausführung der Verbindungselemente 30 zu erkennen. An ihrem axial auslaufenden Ende weisen die Verbindungselemente 30 Einführschrägen 33 auf, welche bei der Verbindung zwischen Sicherungsgitter 11 und Filterelement 13 für ein verkantungsfreies und sich selbst zentrierendes Verbinden zwischen Sicherungsgitter 11 und Filterelement 13 sorgen. Die Verbindungselemente 30 weisen ein kastenförmiges Profil auf, wobei an den beiden großen Außenflächen Verbindungsplatten 34 angeordnet sind. Diese Verbindungsplatten 34 sind einstückig mit den Verbindungselementen 30 verbunden. Dadurch, dass die Verbindungsplatten 34 an ihren Längskanten durch Schlitze 35 von den Verbindungselementen 30 getrennt sind und an ihrer unteren, den Rippen 31 abgewandten Seite ebenfalls nicht mit den Verbindungselementen 30 verbunden sind, sind sie quer zur Verbindungsrichtung zwischen Sicherungsgitter 11 und Filterelement 13 flexibel. An den Verbindungsplatten 34 sind im unteren Bereich nach außen ragende Schnapphaken 36 und im oberen Bereich in der Nähe der Verbindung zum Verbindungselement 30 sind Druckteile 37 angeordnet. Über diese Druckteile 37 kann von außen durch einen Durchgriff durch die Rippen 31 des Sicherungsgitters 11 über ein Zusammendrücken der Verbindungsplatten 34 die durch die Schnapphaken 36 hergestellte Schnappverbindung mit dem Stützkörper 25 gelöst werden. Im unteren Bereich des Stützkörpers 25 lässt sich eine Anschlagkante 38 erkennen, welche sich axial durch den gesamten Stützkörper 25 bis zur oberen Stirnseite durchzieht. Die erste Lage des aufzuwickelnden Filtermediums, bestehend aus einer flachen Lage 23 und einer gefalteten Lage 24, wird anstoßend an die Anschlagkante 38 des Stützkörpers 25 angelegt, dort über einen Leimauftrag verleimt und von dort ausgehend hier im Uhrzeigersinn um den Stützkörper aufgewickelt. In der Detaildarstellung "X" sind die in Figur 2 beschriebenen offenen Kanäle und die geschlossenen Kanäle 27, sowie die flachen Filterlagen 23 und die gefalteten Filterlagen 24 nochmals besonders dargestellt.

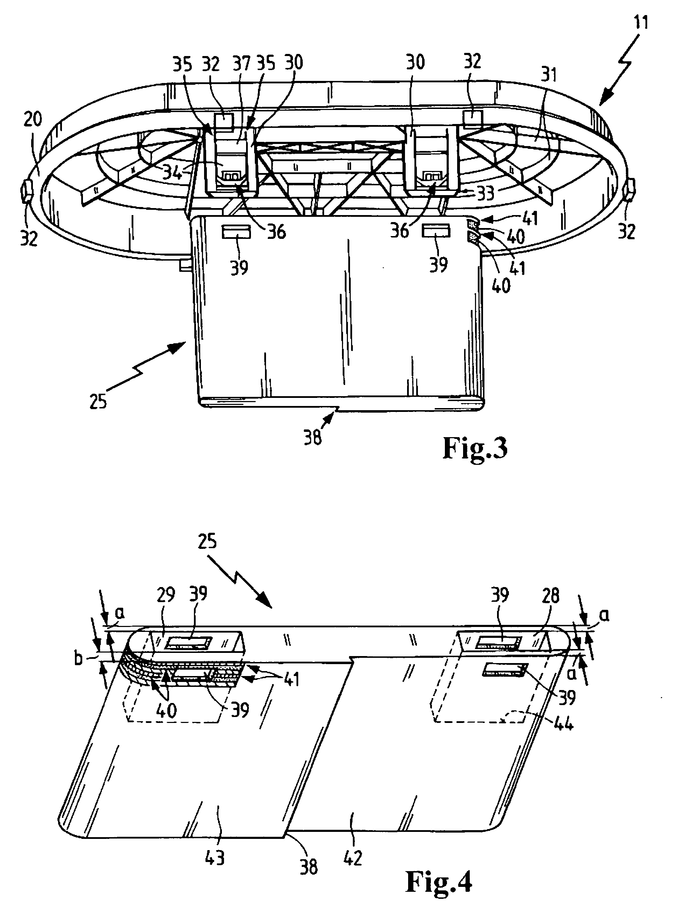

Die Figur 3 zeigt ebenfalls eine schematische Ansicht des Sicherungsgitters 11 kurz vor der Verbindung mit dem Stützkörper 25. Den vorherigen Figuren entsprechende Bauteile sind mit den gleichen Bauteilen versehen. Zur Verdeutlichung der Verbindung wurde hier das Filtermedium inklusive umlaufender Dichtung 18 weggelassen. Zur Herstellung der Schnappverbindung mit den Schnapphaken 36 sind in dem Stützkörper 25 vier Fenster 39 angeordnet. Diese Fenster können als vollständige Durchbrüche oder auch als nicht durchgehende Gegenlager für die Schnapphaken 36 ausgeführt sein. Im rechten oberen Bereich des Stützkörpers sind zwei Nuten 40 im Bereich der rechten Fenster 39 angeordnet, wobei das übrig gebliebene Material als Stege 41 die gleiche Höhe wie der übrige Stützkörper aufweisen. Dadurch ist beim Aufwickeln des Filtermediums auf den Stützkörper 25 ein durchgehendes Anliegen der Wickellagen 23, 24 am Stützkörper 25 gewährleistet.

Die Figur 4 zeigt eine schematische Einzelansicht des Stützkörpers 25. Den vorherigen Figuren entsprechende Bauteile sind mit den gleichen Bezugszeichen versehen. Die oben beschriebenen Verbindungselemente 30, welche von ihren geometrischen Abmaßen bevorzugt gleich ausgeführt sind, tauchen in die Öffnungen 28 und 29 des Stützkörpers 25 ein. Dadurch, dass der Stützkörper 25 durch die Anschlagkante 38 eine materialschwache Seite 42 und eine materialstarke Seite 43 aufweist, und die Öffnungen 28 und 29 bedingt durch die gleichmäßig ausgeführten Verbindungselemente 30 ebenfalls gleich groß ausgeführt sind, ergeben sich Unterschiede in der Wandstärke des Stützkörpers 25 im Bereich der Öffnungen 28, 29. Da zusätzlich die Öffnungen 28, 29 achsparallel zueinander ausgerichtet sind, weist die Öffnung 28 zweimal die gleiche Wandstärke a auf, wohingegen die Wandstärke der Öffnung 29 einmal die Wandstärke a und einmal die deutlich größere Wandstärke b aufweist. Der Stützkörper wird bevorzugt im Spritzgießprozess hergestellt, wobei hier eine Materialanhäufung im Herstellungsprozess vermieden werden sollte. Durch die Ausbildung der beiden Nuten 40, welche nur im Bereich der dickeren Wandstärke b angeordnet sind, wird die Materialanhäufung vermieden, und ein Verziehen des Stützkörpers 25 oder ein unnötiger Spannungsaufbau im Bereich der Öffnung 29 wird dadurch verhindert. Durch die Ausbildung der Öffnungen 28 und 29 als eine Art Sackloch wird durch die untere Abschlusskante der Öffnungen 28, 29 ein Axialanschlag 44 für die Verbindungselemente 30 gebildet. Dadurch ist gewährleistet, dass beim Handhabungsprozess des Filterelementes 13 durch das Sicherungsgitter 11 ein Durchdrücken und Kaputtdrücken des Sicherungsgitters 11 bei Ausübung einer axialen Kraft in Richtung des Filterelementes 13 vermieden wird.

## Patentansprüche

1. Filterelement (13) für einen Fluidstrom zur stirnseitigen Anströmung, aufweisend
- mindestens eine flache Lage (23) und mindestens eine gefaltete Lage (24) wobei die mindestens eine flache Lage (23) mit der mindestens einen gefalteten Lage (24) im Wechsel derart angeordnet ist, dass sich Kanäle mit offenem, insbesondere dreieckigem Querschnitt ergeben,
- dichte Verschlüsse jeweils der einen ersten Gruppe von Kanälen einerseits und dichte Verschlüsse der restlichen, nicht zu genannter Gruppe zählenden Kanäle einer zweiten Gruppe andererseits derart, dass das zu filternde Fluid bei der Durchströmung des Filterelementes (13) von einer Anströmseite, gebildet durch eine Stirnseite des Filterelementes (13), zu einer Abströmseite, gebildet durch dessen andere Stirnseite, eine der genannten Lagen, die zur Filterung des Fluides vorgesehen ist, durchtreten muss,
- Mittel zur Abdichtung (18) der Anströmseite von der Abströmseite des Filterelementes (13) in einem Gehäuseteil,
- wenigstens einen zentral im Filterelement (13) angeordneten, von den Kanälen umgebenen Stützkörper, welcher sich axial im Wesentlichen bis zu wenigstens einer ersten Stirnseite des Filterelementes (13) erstreckt,
- wobei sowohl die mindestens eine flache Lage (23) als auch die mindestens eine gefaltete Lage (24) aus durchströmbaren Filtermedien bestehen,
- wobei an jeder den offenen Querschnitt bildenden Seite derjenigen Kanäle der ersten Gruppe, die vom Rand des Filterelementes (13) beabstandet sind, ein Kanal der zweiten Gruppe benachbart ist, so dass die vollständige Fläche der Kanäle der ersten Gruppe bis auf Faltkanten der Kanäle vom Fluid durchströmbar ist,
- wobei der Stützkörper (25) an der sich im Wesentlichen bis zur ersten Stirnseite des Filterelementes (13) erstreckenden Seite, wenigstens eine stirnseitig angeordnete Öffnung (28, 29) aufweist, in welcher Mittel zur Handhabung des Filterelementes (13) mittels eines hierzu korrespondierenden Gegenparts angeordnet sind,
**dadurch gekennzeichnet, dass** die mindestens eine flache Lage (23) und die mindestens eine gefaltete Lage (24) im Wechsel um den Stützkörper gewickelt sind und der Stützkörper eine axial über die Höhe des Stützkörpers (25) verlaufende Stufe aufweist, welche eine Anschlagkante (38) für die erste Wickellage darstellt.

2. Filterelement (13) nach Anspruch 1, **dadurch gekennzeichnet, dass** der Stützkörper eine längliche Form aufweist, wobei die Stufe im Wesentlichen in der Mitte des länglichen Stützkörpers angeordnet ist und im jeweils äußeren Bereich der ersten Stirnseite des Filterelementes (13) jeweils eine Öffnung (28, 29) mit Mitteln zur Handhabung des Filterelementes (13) aufweist.

3. Filterelement (13) nach Anspruch 2, **dadurch gekennzeichnet, dass** der Stützkörper im Bereich wenigstens einer Öffnung (28, 29) parallel zur Stirnseite an der Außenfläche angeordnet wenigstens eine Nut aufweist.

4. Filterelement (13) nach einem der vorhergehenden Ansprüche, **dadurch gekennzeichnet, dass** in wenigstens einer Öffnung (28, 29) des Stützkörpers ein Axialanschlag für den Gegenpart angeordnet ist.

5. Filtervorrichtung (10) mit einem Filterelement (13) gemäß Anspruch 1 und einem Gegenpart, **dadurch gekennzeichnet, dass** das Filterelement (13) in einem ersten Gehäuseteil (12) angeordnet ist,
- wobei eine im Bereich der ersten Stirnseite des Filterelementes (13) radial umlaufende Dichtung (18) des Filterelementes (13) an einer korrespondierend hierzu ausgestalteten Gehäuseaufnahme des ersten Gehäuseteils (12) anliegt, derart, dass eine Abdichtung zwischen An- und Abströmseite hergestellt ist,
- wobei ein zweites Gehäuseteil als Gegenpart mit einem Teil in die Öffnung (28, 29) des Stützkörpers des Filterelementes (13) eingeclipst ist,
- wobei das zweite Gehäuseteil die Form eines fluiddurchlässigen Sicherungsgitters (11) aufweist, die Außenkontur korrespondierend zur stirnseitigen Anlagefläche der umlaufenden Dichtung ausgestaltet ist und
- an der Außenkontur Befestigungsmittel zur lösbaren Befestigung des zweiten Gehäuseteils am ersten Gehäuseteil (12) unter Einklemmung der Dichtung des Filterelementes (13) angeordnet sind, derart, dass nach dem Lösen der Befestigung zwischen den Gehäuseteilen eine Handhabung des Filterelementes (13) durch das zweite Gehäuseteil möglich ist.

## Claims

1. Filter element (13) for a fluid flow for a frontal on-flow, featuring
- at least one flat layer (23) and at least one folded layer (24), the at least one flat layer (23) being arranged alternately with the at least one folded layer (24) in such a way that channels with open, in particular triangular cross section are formed,
- tight closures each of the first group of channels on the one hand and tight closures of the remaining channels of a second group not belonging to the mentioned group on the other hand in such a way that the fluid to be filtered must pass during the through-flow of the filter element (13) from an on-flow side - formed by a front end of the filter element (13) - to an off-flow side - formed by its other front end - through one of the mentioned layers intended for the filtration of the fluid,
- means for sealing (18) the on-flow side from the off-flow side of the filter element (13) in one housing component,
- at least one in the filter element (13) centrally arranged supporting element surrounded by the channels which extends basically in axial direction up to at least one first front end of the filter element (13),
- wherein the at least one flat layer (23) as well as the at least one folded layer (24) consist of through-flowable filter media,
- wherein at each side forming the open cross section of those channels of the first group, that are spaced from the edge of the filter element (13), a channel of the second group is adjacent so that the full surface of the channels of the first group is through-flowable by the fluid, except the folded edges of the channels,
- wherein the supporting element (25) features at least one frontally arranged opening (28, 29) at the side that basically extends up to the first front end of the filter element (13), in which means for handling the filter element (13) are arranged by means of a corresponding counterpart,
**characterized in that** the at least one flat layer (23) and the at least one folded layer (24) are alternately wound around the supporting element and the supporting element features a step running axially above the height of the supporting element (25) which represents a stop angle (28) for the first wound layer.

2. Filter element (13) according to claim 1, **characterized in that** the supporting element features an oblong form, the step being arranged basically in the center of the oblong supporting element and that it features in the respective outer area of the first front end of the filter element (13) one opening each (28, 29) with appliances for handling the filter element (13).

3. Filter element (13) according to claim 2, **characterized in that** the supporting element features in the area of at least one opening (28, 29) and arranged parallel to the front end at the outer surface at least one groove.

4. Filter element (13) according to one of the above-mentioned claims, **characterized in that** in at least one opening (28, 29) of the supporting element an axial stop for the counterpart is arranged.

5. Filtering device (10) with a filter element (13) according to claim 1 and a counterpart, **characterized in that** the filter element (13) is arranged in one first housing component (12),
- wherein in the area of the first front end of the filter element (13) a radially circumferential sealing (18) of the filter element (13) abuts a correspondingly designed housing receptacle of the first housing component (12) in such a way that a sealing is realized between on-flow side and off-flow side,
- wherein a second housing component is clipsed as counterpart with one part into the opening (28, 29) of the supporting element of the filter element (13),
- wherein the second housing component features the form of a fluid-permeable safety grid (11), the external contour being correspondingly designed to the frontal contact surface of the circumferential sealing, and
- at the external contour fixing material for the detachable fixing of the second housing component is arranged at the first housing component (12) by clamping the sealing of the filter element (13) in such a way that after detaching the fixing between the housing components a handling of the filter element (13) through the second housing component is possible.

## Revendications

1. Elément de filtre (13) pour une veine de fluide arrivant sur la face frontale et comportant :
- au moins une couche plate (23) et au moins une couche pliée (24), au moins la couche plate (23) alternant avec au moins une couche pliée (24) pour former des canaux ouverts notamment à section triangulaire ;
- des fermetures étanches chaque fois d'un côté pour un premier groupe de canaux et des fermetures étanches pour les canaux restant, n'appartenant pas à ce groupe mais à un second groupe, de l'autre côté, canaux que le fluide à filtrer doit traverser au passage de l'élément filtrant (13) en passant du côté d'entrée formé par une face frontale de l'élément de filtre (13) vers le côté de sortie formé par l'autre face frontale dans l'une des couches prévues pour filtrer le fluide ;
- des moyens pour assurer l'étanchéité (18) du côté d'entrée par rapport au côté de sortie de l'élément de filtre (13) dans une partie de boîtier ;
- au moins un organe de support, central dans l'élément de filtre (13) entouré par les canaux, et qui s'étend axialement principalement jusqu'à au moins une première face frontale de l'élément filtrant (13) ;
- à la fois au moins une couche plate (23) et au moins une couche pliée (24) se composant de milieux filtrants perméables ;
- sur chaque côté formant la section ouverte, les canaux correspondants du premier groupe écartés du bord de l'élément de filtre (13) étant voisins d'un canal du second groupe de sorte que toute la surface des canaux du premier groupe jusqu'aux arêtes de pliage des canaux sont traversés par le fluide ; et
- l'organe de support (25) du côté qui s'étend pratiquement jusqu'à la première face de l'élément de filtre (13), comportant au moins une ouverture (28, 29) côté frontal, munie de moyens pour manipuler l'élément de filtre (13) à l'aide d'une pièce complémentaire correspondante ;
**caractérisé en ce qu'**au moins une couche plate (23) et au moins une couche pliée (24) sont enroulées alternativement autour de l'organe de support et celui-ci a un gradin s'étendant axialement sur toute sa hauteur (25) et qui correspond à l'arête de butée (38) de la première couche d'enroulement.

2. Elément de filtre (13) selon la revendication 1, **caractérisé en ce que** l'organe de support a une forme allongée et le gradin se pose pratiquement au milieu de l'organe de support allongé, et chaque fois la zone extérieure de la première face frontale de l'élément de filtre (13) a une ouverture (28, 29) avec des moyens pour manipuler l'élément de filtre (13).

3. Elément de filtre (13) selon la revendication 2, **caractérisé en ce que** l'organe de support comporte au niveau d'au moins une ouverture (28, 29), au moins une rainure parallèle à la face frontale, sur la surface extérieure.

4. Elément de filtre (13) selon l'une des revendications précédentes, **caractérisé en ce que** dans au moins une ouverture (28, 29) de l'organe de support, il y a une butée axiale pour la pièce complémentaire.

5. Dispositif de filtre (10) comportant un élément de filtre (13) selon la revendication 1 et une pièce complémentaire, **caractérisé en ce que**
- l'élément de filtre (13) est placé dans une première partie de boîtier (12) ;
- au moins un joint (18) périphérique radial de l'élément de filtre (13) est prévu dans la zone de la première face frontale de l'élément de filtre (13) en s'appliquant contre un logement de boîtier de forme correspondante de la première partie de boîtier (12) de façon à réaliser l'étanchéité entre le côté d'entrée et le côté de sortie ;
- une seconde partie de boîtier est enclipsée comme pièce complémentaire avec une partie dans l'ouverture (28, 29) de l'organe de support de l'élément de filtre (13) ;
- la seconde partie de boîtier a la forme d'une grille de fixation (11), perméable aux fluides, dont le contour extérieur est réalisé de façon à correspondre à la surface d'appui frontale du joint périphérique ; et
- le contour extérieur comporte des moyens de fixation pour la fixation amovible de la seconde partie de boîtier sur la première partie de boîtier (12) en pinçant le joint de l'élément de filtre (13) de façon qu'après libération de la fixation entre les parties de boîtier, l'élément de filtre (13) puisse être manipulé à travers la seconde partie de boîtier.
